(19) **Europäisches Patentamt / European Patent Office / Office européen des brevets**

(11) **EP 1 180 679 B1**

(12) **EUROPEAN PATENT SPECIFICATION**

(45) Date of publication and mention
of the grant of the patent:
**10.10.2012 Bulletin 2012/41**

(51) Int Cl.:
***G01N 21/64*** (2006.01)

(21) Application number: **00117522.3**

(22) Date of filing: **14.08.2000**

(54) **A method for sensing fluorescent samples utilizing moment analysis**

Verfahren zur Detektion fluoreszierender Proben mittels einer Momentenanalyse

Procédé de détection d'échantillons fluorescents au moyen d'une analyse à moments

(84) Designated Contracting States:
**AT BE CH CY DE DK ES FI FR GB GR IE IT LI LU MC NL PT SE**

(43) Date of publication of application:
**20.02.2002 Bulletin 2002/08**

(73) Proprietor: **Evotec AG**
**22419 Hamburg (DE)**

(72) Inventors:
• **Gall, Karsten**
**27616 Lunestedt (DE)**
• **Kask, Peet**
**76902 Harku (EE)**
• **Klumpp, Martin**
**25479 Ellerau (DE)**

(74) Representative: **von Kreisler Selting Werner**
**Deichmannhaus am Dom**
**Bahnhofsvorplatz 1**
**50667 Köln (DE)**

(56) References cited:
**EP-A- 0 601 714     EP-A- 0 836 090**
**EP-A- 0 884 583**

• **H. QIAN ET AL.: "Distribution of molecular aggregation by analysis of fluctuation moments" PROCEEDINGS OF THE NATIONAL ACADEMY OF SCIENCES OF USA., vol. 87, July 1990 (1990-07), pages 5479-5483, XP000647943 NATIONAL ACADEMY OF SCIENCE. WASHINGTON., US ISSN: 0027-8424**

**Description**

Screening large numbers of chemical compounds against assays for macromolecular targets has become the major paradigm in drug discovery (Persidis A., Nat. Biotechnol., 16: 488 - 489, 1998). Whereas the widespread application of combinatorial chemistry techniques is already resulting in a quasi-exponential increase in the number of compounds available for testing, genome sequencing and analysis will inevitably feed even more targets into drug discovery. Rapid and cost-effective processing of these targets requires the development of novel assay formats and technologies. These not only have to allow screening at higher throughput in a miniaturized format thus reducing compound and reagent consumption, but also should overcome the waste-disposal problems associated with commonly used radioactive methods. In addition, they cannot depend on separation steps which hamper automation and miniaturisation.

G protein-coupled receptors (GPCR's) belong to a large superfamily of multi-spanning membrane proteins which probably represent the single most important class of drug targets. However, in comparison to other targets such as soluble proteins or enzymes, progress in the development of non-radioactive, homogeneous, miniaturized assays for GPCR's has so far been slow. In contrast, genome sequencing is continually leading to the identification of new GPCR targets (Uddhav, K. et al., Mol. Biol. Rep. 25: 27 - 43, 1998; Stadel et al.., Trends Pharmacol. Sci. 18: 430 - 437, 1997). In this situation, the development of suitable assays is often a critical factor in competitiveness for pharmaceutical companies.

Qian et al. (Proc. Natl. Acad. Sci. USA vol. 87, July 1990, p. 5479-5483) describe studies of molecular aggregation in simple model systems consisting of fluorescent particles by the analysis of fluctuation moments of the fluorescence intensity. EP-A-0 601 714 describes a method and device for determining the location of a molecule group and the number of fluorescent molecules in the molecule group.

It was therefore the object of the present invention to provide assay formats fulfilling the demands described above. These assay formats should also be suitable tools for analyzing solid support structures for target molecules, or for soluble support structures such as beads.

The object has been solved by the method according to the features of claim 1 and the apparatus according to the features of claim 16. The subclaims define preferred embodiments of the method and the apparatus of the present invention.

The present invention relates to a method for sensing fluorescent samples of cells, or soluble or solid supports in a medium, said method comprising the steps of:

(a) monitoring intensity of fluorescence emitted from said fluorescent samples by measuring with the help of one or more photon detectors numbers of photon counts **n** per counting time interval or digitized values **n** of fluorescence intensity per time interval in a plurality of sensed volumes,

(b) calculating a series of moments $\hat{M}_i$ of the measured photon count numbers or of the digitized values, defined as

$$\hat{M}_i = \sum_{\mathbf{n}} \mathbf{n}^i \hat{P}(\mathbf{n}) = average(\mathbf{n}^i) = average(n_1^{i_1} n_2^{i_2} \ldots),$$

where $\hat{P}(\mathbf{n})$ denotes a normalized histogram of photon count numbers or digitized values, and

(c) estimating characteristic parameters of the cells, or soluble or solid supports $\mathbf{a}_{cell}$ and of the medium $\mathbf{a}_{medium}$ from said series of moments $\hat{M}_i$ using a set of equations corresponding to different orders of the moment **i**, of a general form

$$\hat{M}_i = P_{cell} M_i^{(cell)}(\mathbf{a}_{cell}) + (1 - P_{cell}) M_i^{(medium)}(\mathbf{a}_{medium}),$$

where

$P_{cell}$ denotes the probability that the sensed volume is situated in or on the cell, or soluble or solid support,

$M_i^{(cell)}(\mathbf{a}_{cell})$

denotes the expected **i**-th moment of the photon count number or digitized value provided the sensed volume is situated in or on the cell, or soluble or solid support, as a function of the parameters $\mathbf{a}_{cell}$ and $M_i^{(medium)}(\mathbf{a}_{medium})$

denotes the expected i-th moment of the photon count number or digitized value provided the sensed volume is situated in the medium, as a function of the parameters $\mathbf{a}_{medium}$. The function $M_i^{(cell)}(\mathbf{a}_{cell})$ should be a given one.

Preferably, the medium is a liquid or gel. It preferably comprises fluorescent ligands capable of binding to said cells, or soluble or solid supports and $M_i^{(medium)}$ is calculated from cumulants $K_i = c_{ligand} \mathbf{q}_{ligand}^i$, where $c_{ligand}$ denotes the mean number of ligands per sensed volume, and $\mathbf{q}_{ligand}$ denotes the mean number of photon counts detected per ligand by one or more photon detectors.

Preferably, values of those characteristic parameters of the cells, or soluble or solid supports which are expected to be constant through a series of samples are fixed to a single value while estimating further characteristic parameters from said series of moments $\hat{M}_i$.

In another embodiment, the method further comprises the application of an image analysis procedure to determine one or more of the parameters of $P_{cell}$, $\mathbf{a}_{cell}$, or $\mathbf{a}_{medium}$. It might additionally be preferred to monitor the intensity of emission scattered by said samples.

Said characteristic parameters of said cells, or soluble or solid supports $\mathbf{a}_{cell}$ are preferably chosen from the group consisting of concentration, specific brightness, width of a brightness distribution, and a function of intensities of different polarization components of emission or spectrally different components of emission.

In one embodiment, the number of photon counts is determined using at least two photon detectors monitoring emission of different wavelength and/or of different polarization and a series of at least two-dimensional moments $\hat{M}_{ij}$ of photon count numbers $n_1$ and $n_2$ is calculated, defined as

$$\hat{M}_{ij} = \sum_{n_1} \sum_{n_2} n_1^i n_2^j \hat{P}(n_1, n_2) = average(n_1^i n_2^j).$$

A plurality of sensed volumes might be monitored sequentially in time by scanning a sensed volume through the sample. However, it is also possible to monitor a plurality of sensed volumes in parallel. Said plurality of sensed volumes can be used to form a two-or three-dimensional image.

A further embodiment of the invention relates to the use of non-photoncounting detectors. For example, many imaging detectors, such as CCD, CID, CMOS pixel arrays provide intensity values for each pixel, especially when combined with parallel confocal optics (e.g. applying a Nipkow disk embodiment; or a line scanner embodiment; or a Programmable Array Microscope embodiment (see e.g. EP 0 911 667 A1 "Programmable spatially light modulated microscope and microscopy method" and WO 98/286655 "Light modulated confocal optical instrument and method" ; or a Multiple Photon excitation embodiment, especially 2-photon excitation embodiment). Furthermore, traditional Laser Scanning Microscopes are usually equipped with photomultipliers which do not show photon counting resolution. All these detectors provide an analogue electric signal which is mainly proportional to the light intensity detected. The present invention can process also these signals if one further step is applied which is the digitization of the electric signal, especially by an analogue to digital converter. It is preferred to correct during this step for any nonlinear behavior of the detector or detectorarray. After the digitization of the signal, the method of the present invention can be applied, taking the digitized values of the electric signal instead of the photon counts n.

It is preferred to use a confocal optical device for monitoring intensity of emission. In a further embodiment, it is preferred to employ multiple photon excitation to stimulate fluorescence emission. Preferably, in each dimension X, Y and Z the diameter of said cells, or soluble or solid supports is greater than the diameter of the sensed volume. In another embodiment, the use of near field optics for exciting fluorescence and/or collecting the fluorescence photons is preferred. A feedback mechanism for adjusting the z-height of the nearfield optics tip is preferably employed in this embodiment to adapt for the nonplanar surface of cells or particles, especially beads.

The method is particularlay suited for use in diagnostics, high throughput drug screening, optimization of properties of molecules or identification of specific cell, or soluble or solid carrier populations.

In this respect, the invention also provides an assay for screening a single compound or preferably a plurality of compounds for inhibition between a ligand and a target molecule expressed by or attached to a cell, or soluble or solid support, said assay comprising the steps of:

- adding a liquid suspension of said target molecules expressed by or attached to said cell, or soluble or solid support to a plurality of containers;
- adding a plurality of compounds to be screened for said inhibition to said plurality of containers;
- adding fluorescently labelled ligand to said containers;
- incubating said target molecules expressed by or attached to said cell, or soluble or solid support, said compounds, and said fluorescently labelled ligand;
- individually measuring amounts of fluorescence associated with said cells, or soluble or solid supports; and
- determining the degree of inhibition by one or more of said compounds of binding of said ligand to said target molecule;

wherein said amounts of fluorescence associated with said cells, or soluble or solid supports are estimated utilizing the moment analysis as outlined above.

The invention also provides an assay for testing a compound to determine the degree of binding of said compound to a target molecule expressed by or attached to a cell, or soluble or solid support, said assay comprising the steps of:

- adding a liquid suspension of said target molecule expressed by or attached to said cell, or soluble or solid support to a container;
- adding a fluorescent compound to be tested for its binding to said container;
- incubating said target molecule expressed by or attached to said cell, or soluble or solid support and said compound;
- measuring amounts of fluorescence associated with said cell, or soluble or solid support; and
- determining the degree of binding of said compound to said target molecule;

said amounts of fluorescence associated with said cell, or soluble or solid support is estimated utilizing the moment analysis as outlined above.

A further assay tests the influence of a compound on the degree of expression and/or secretion of an intrinsically fluorescent molecule or marker molecule, especially green fluorescenct proteine (GFP), said assay comprising the steps of:

- adding a liquid suspension of cells expressing said fluorescent target molecule to a container;
- adding a compound to said container;
- incubating said cells and said compound;
- measuring amounts of fluorescence associated with said cell, ; and
- determining the degree of expression and/or secretion of said target molecule;

wherein said amounts of fluorescence associated with said cell, is estimated utilizing the moment analysis as outlined above. However, this assay principle can also be applied without addition of a compound with the goal of estimating expression and/or secretion of fluorescent target molecules by a cell.

In one embodiment of the above disclosed assay principles, a plurality of different compounds and/or different targets is tested in a plurality of containers. Said container can e.g. be a micro- or nanoplate, preferably with a density of 96, 384, 768, 1536, 3456 or 9600 wells per plate. Other containers comprise microcapillaries or microfluidic networks, preferably with capillary electrophoretic or dielectrophoretic actuation of the liquid or hydrostatic pressure applied to the liquid.

In a further aspect, the invention provides an apparatus for working the above disclosed method and assay principles. The apparatus comprises:

- a stage for supporting a sample in an examination site, the sample comprising cells, or soluble or solid supports in a medium;
- a light source positioned to deliver light to the sample in the examination site;
- a detector positioned to receive fluorescence emitted from the sample in the examination site and constructed so that it determines numbers of photon counts **n** per counting time interval or digitized values **n** of fluorescence intensity per time interval in a plurality of sensed volumes and delivers the numbers **n** to an evaluation device;
- an evaluation device coupled to the detector for receiving and evaluating the numbers or values **n**; characterized in that
- the evaluation device is adapted to

(i) calculate a series of moments $\hat{M}_i$ of the measured photon count numbers or digitized values, defined as

$$\hat{M}_i = \sum_{n} n^i \hat{P}(n) = average(n^i) = average(n_1^{i_1} n_2^{i_2} \ldots),$$

where $\hat{P}(n)$ denotes a normalized histogram of photon count numbers or digitized values, and
(ii) estimate characteristic parameters of the cells, or soluble or solid supports $a_{cell}$ and of the medium $a_{medium}$ from said series of moments $\hat{M}_i$ using a set of equations corresponding to different orders of the moment $i$, of a general form

$$\hat{M}_i = P_{cell} M_i^{(cell)}(a_{cell}) + (1 - P_{cell}) M_i^{(medium)}(a_{medium}),$$

where
$P_{cell}$ denotes the probability that the sensed volume is situated in or on the cell, or soluble or solid support,

$$M_i^{(cell)}(a_{cell})$$

denotes the expected $i$-th moment of the photon count number or digitized value provided the sensed volume is situated in or on the cell, or soluble or solid support, as a function of the parameters $a_{cell}$ and

$M_i^{(medium)}(a_{medium})$ denotes the expected i-th moment of the photon count number or digitized value provided the sensed volume is situated in the medium, as a function of the parameters $a_{medium}$. Preferably, the evaluation device comprises a computer unit for the above disclosed moment analysis.

The apparatus preferably comprises a confocal optical element located between the light source and the detector, the confocal optical element being capable of transmitting light substantially exclusively from a sensed volume of the sample. In one embodiment, the apparatus comprises an X, Y-axes adjustment device that automatically adjusts the relative positions of the sensed volume and the sample along the X and Y axes (wherein X, Y-axes are defined perpendicular to each other and parallel to the stage). The apparatus might further comprise a Z-axis adjustment device that automatically adjusts the relative positions of the sensed volume along the Z-axis (wherein a Z-axis is defined substantially perpendicular to the stage). The use of diffraction limited confocal optics results in a hightly focused laser beam which effectively decouples detection and assay volumes and makes the readout from these methods insensitive to miniaturization. In a further embodiment, the apparatus makes use of near field spectroscopy or is adapted for multiple photon excitation.
The accompanying figures illustrate the present invention. In the figures the following is shown:

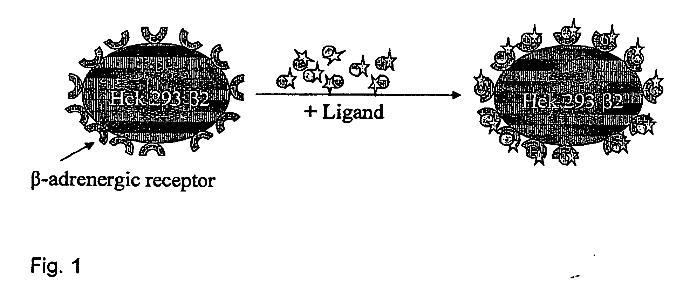

Fig. 1    is a schematic drawing of a preferred embodiment of the principle of the assay performed according to example 1.

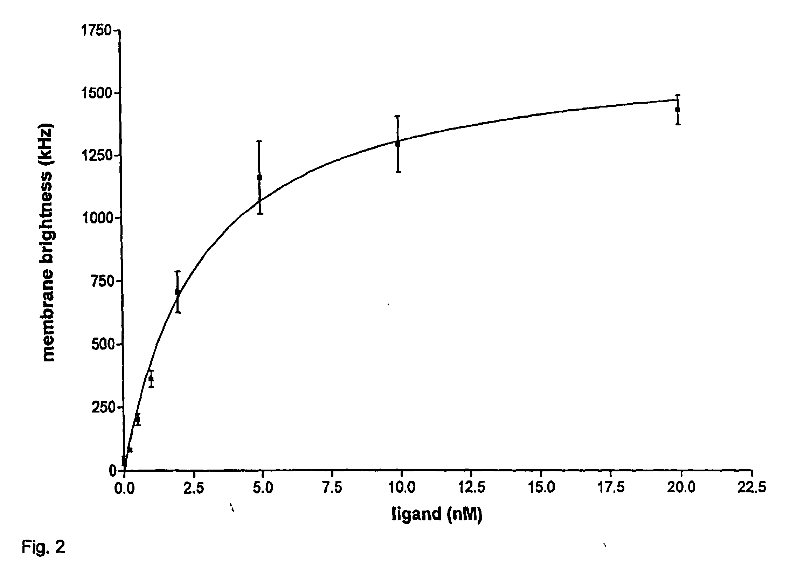

Fig. 2    depicts results of example 1 and shows the binding of fluorescently labelled ligand to the receptor by virtue of membrane brightness determined utilizing the method according to the present invention.

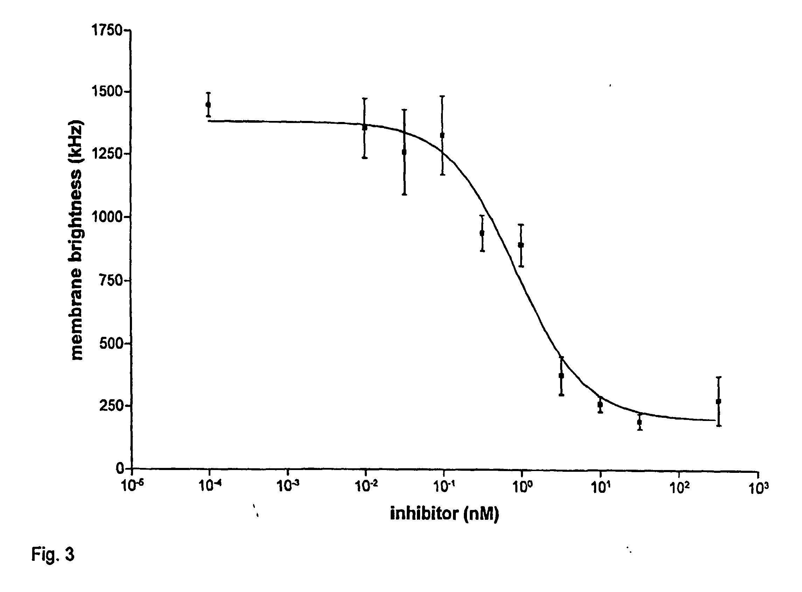

Fig. 3    depicts results of example 1 and shows the inhibition of binding by virtue of membrane brightness determined utilizing the method according to the present invention.

Example 1

The present example illustrates the determination of cells parameters from normalized photon count histograms recorded by confocal measurement. As an example, the determination of the membrane brightness of cells expressing the beta-2 adrenergic receptor in the presence of a flurorescently labelled ligand for this receptor, namely FL-CGP12177 (Molecular Probes) is described. Through determination of membrane brightness utilizing the moment analysis according to the invention, both the binding of ligand to receptor and inhibition thereof are followed.
The cells are incubated with different ligand concentrations for one hour at 37 °C and 5% $CO_2$. For the determination of the $IC_{50}$, different concentrations of non-fluorescent competitor CPG-12177 are added to a 2 nM solution of the bodipy-labelled ligand and incubated with the cells. Fluorescence is measured confocally utilizing either a confocal fluorescence reader equipped with a beamscanner and focussing means (see European patent application 98 124 314.0) at an excitation wavelength of 488 nm with a 535RDF45 emission filter or a Nipkow-device at an excitation wavelength of 488 without emission filter.

Photon counts are recorded for each of several sensed volumes within the sample. The fluorescence intensity in the different sensed volumes is recorded either sequentially or in parallel (Nipkow embodiment), and the frequency with which a particular photon count is observed is plotted. Some of the sensed volumes contain only the liquid surrounding the cells and therefore the fluorescence intensity measured in them reflects the ligand molecules not bound to the cells. Other sensed volumes reside on or in the cells and thus exhibit fluorescence orginating from the ligand that is bound to its receptor in the cell membrane. These different contributions to the photon count histogram are distinguished by recording a comparable measurement from a sample in which only the fluorescently labelled ligand, but no cells are present. Thus, the photon count distribution obtained from the latter describes the contribution of the free ligand and allows to calculate molecular brightness. The moments of this second distribution are weighted with 1-P and subtracted from those of the first distribution (P denotes the propability of a particular sensed volume to reside in or on a cell). Thus, the histogram of the cell-containing sample is corrected for the contribution of free ligand molecules. The residuals reflect the brightness of cell membranes, which can then be calculated from the moments. Membrane brightness can be plotted as a function of either ligand or competitor concentration, which allows to determine by non-linear least squares fitting $K_d$ and $IC_{50}$ values, respectively. These parameters are generally used in biochemistry and pharmacology to characterize receptor-ligand interactions and their inhibition.

## Claims

1. A method for sensing fluorescent samples of cells, or soluble or solid supports in a medium, said method comprising the steps of:

   (a) monitoring intensity of fluorescence emitted from said fluorescent samples by measuring with the help of one or more photon detectors numbers of photon counts **n** per counting time interval in a plurality of sensed volumes,
   (b) calculating a series of moments $\hat{M}_i$, of the measured photon count numbers, defined as

   $$\hat{M}_i = \sum_n \mathbf{n}^i \hat{P}(\mathbf{n}) = average(\mathbf{n}^i) = average(n_1^{i_1} n_2^{i_2} ...) ,$$

   where $\hat{P}(\mathbf{n})$ denotes a normalized histogram of photon count numbers, and
   (c) estimating characteristic parameters of the cells, or soluble or solid supports $\mathbf{a}_{cell}$ and of the medium $\mathbf{a}_{medium}$ from said series of moments $\hat{M}_i$ using a set of equations corresponding to different orders of the moment **i**, of a general form

   $$\hat{M}_i = P_{cell} M_i^{(cell)}(\mathbf{a}_{cell}) + (1 - P_{cell}) M_i^{(medium)}(\mathbf{a}_{medium}) ,$$

   where
   $P_{cell}$ denotes the probability that the sensed volume is situated in or on the cell, or soluble or solid support,

   $M_i^{(cell)}(\mathbf{a}_{cell})$ denotes the expected **i**-th moment of the photon count number provided the sensed volume is situated in or on the cell, or soluble or solid support, as a function of the parameters $\mathbf{a}_{cell}$ and

   $M_i^{(medium)}(\mathbf{a}_{medium})$
   denotes the expected **i**-th moment of the photon count number provided the sensed volume is situated in the medium, as a function of the parameters $\mathbf{a}_{medium}$.

2. The method according to claim 1 wherein the medium is a liquid or gel.

3. The method according to claim 1 or 2 wherein the medium comprises fluorescent ligands capable of binding to said cells, or soluble or solid supports and wherein $M_i^{(medium)}$ is calculated from cumulants $K_i = c_{ligand} \mathbf{q}_{ligand}^i$ , where $c_{ligand}$ denotes the mean number of ligands per sensed volume, and $\mathbf{q}_{ligand}$ denotes the mean number of photon counts detected per ligand by one or more photon detectors.

4. The method according to any of claims 1 or 3 wherein values of those characteristic parameters of the cells, or soluble or solid supports which are expected to be constant through a series of samples are fixed to a single value while estimating further characteristic parameters from said series of moments $\hat{M}_i$.

5. The method according to any of claims 1 to 4, further comprising:

   applying an image analysis procedure to determine one or more of the parameters of $P_{cell}$, $\mathbf{a}_{cell}$, or $\mathbf{a}_{medium}$.

6. The method according to any of claims 1 to 5, further comprising:

   monitoring intensity of emission scattered by said samples.

7. The method according to any of claims 1 to 6 wherein said characteristic parameters of said cells, or soluble or solid supports $\mathbf{a}_{cell}$ are chosen from the group consisting of concentration, specific brightness, width of a brightness distribution, and a function of intensities of different polarization components of emission or spectrally different components of emission.

8. The method according to any of claims 1 to 7 wherein the number of photon counts is determined using at least two photon detectors monitoring emission of different wavelength and/or of different polarization and wherein a series of at least two-dimensional moments $\hat{M}_{ij}$ of photon count numbers $n_1$ and $n_2$ is calculated, defined as

$$\hat{M}_{ij} = \sum_{n_1} \sum_{n_2} n_1^i n_2^j \hat{P}(n_1, n_2) = average(n_1^i n_2^j).$$

9. The method according to any of claims 1 to 8 wherein said plurality of sensed volumes is monitored sequentially in time by scanning a sensed volume through the sample.

10. The method according to any of claims 1 to 8 wherein said plurality of sensed volumes is monitored in parallel.

11. The method according to claims 9 or 10 wherein said plurality of sensed volumes are used to form a two-or three-dimensional image.

12. The method according to any of claims 1 to 11 wherein a confocal optical device is used for monitoring intensity of emission.

13. The method according to any of claims 1 to 12 wherein multiple photon excitation is employed to stimulate fluorescence emission.

14. The method according to any of claims 1 to 13 wherein in each dimension X, Y and Z the diameter of said cells, or soluble or solid supports is greater than the diameter of the sensed volume.

15. The method according to any of claims 1 to 14 for use in diagnostics, high throughput drug screening, optimization of properties of molecules or identification of specific cell, or soluble or solid carrier populations.

16. An apparatus for working the method according to claims 1 to 15 comprising:

   - a stage for supporting a sample in an examination site, the sample comprising cells, or soluble or solid supports in a medium;
   - a light source positioned to deliver light to the sample in the examination site;
   - a detector positioned to receive fluorescence emitted from the sample in the examination site and constructed so that it determines numbers of photon counts $\mathbf{n}$ per counting time interval in a plurality of sensed volumes and delivers the numbers **n** to an evaluation device;
- an evaluation device coupled to the detector for receiving and evaluating the numbers **n**; **characterized in that**
- the evaluation device is adapted to

(i) calculate a series of moments $\hat{M}_i$ of the measured photon count numbers, defined as

$$\hat{M}_i = \sum_n \mathbf{n}^i \hat{P}(\mathbf{n}) = average(\mathbf{n}^i) = average(n_1^{i_1} n_2^{i_2} ...) ,$$

where $\hat{P}(\mathbf{n})$ denotes a normalized histogram of photon count numbers, and
(ii) estimate characteristic parameters of the cells, or soluble or solid supports $\mathbf{a}_{cell}$ and of the medium $\mathbf{a}_{medium}$ from said series of moments $\hat{M}_i$ using a set of equations corresponding to different orders of the moment **i**, of a general form

$$\hat{M}_i = P_{cell} M_i^{(cell)}(\mathbf{a}_{cell}) + (1 - P_{cell}) M_i^{(medium)}(\mathbf{a}_{medium}) ,$$

where
$P_{cell}$ denotes the probability that the sensed volume is situated in or on the cell, or soluble or solid support,

$M_i^{(cell)}(\mathbf{a}_{cell})$ denotes the expected **i**-th moment of the photon count number provided the sensed volume is situated in or on the cell, or soluble or solid support, as a function of the parameters $\mathbf{a}_{cell}$ and

$M_i^{(medium)}(\mathbf{a}_{medium})$ denotes the expected i-th moment of the photon count number provided the sensed volume is situated in the medium, as a function of the parameters $\mathbf{a}_{medium}$.

17. The apparatus according to claim 16 further comprising a confocal optical element located between the light source and the detector, the confocal optical element being capable of transmitting light substantially exclusively from a sensed volume of the sample.

18. The apparatus according to claim 16 or 17 wherein X, Y-axes are defined perpendicular to each other and parallel to the stage, further comprising an X, Y-axes adjustment device that automatically adjusts the relative positions of the sensed volume and the sample along the X and Y axes.

19. The apparatus according to any of claims 16 to 18 wherein a Z-axis is defined substantially perpendicular to the stage, further comprising a Z-axis adjustment device that automatically adjusts the relative positions of the sensed volume along the Z-axis.

20. An assay for screening a plurality of compounds for inhibition between a ligand and a target molecule expressed by or attached to a cell, or soluble or solid support, said assay comprising the steps of:

- adding a liquid suspension of said target molecules expressed by or attached to said cell, or soluble or solid support to a plurality of containers;
- adding a plurality of compounds to be screened for said inhibition to said plurality of containers;
- adding fluorescently labelled ligand to said containers;
- incubating said target molecules expressed by or attached to said cell, or soluble or solid support, said compounds, and said fluorescently labelled ligand;
- individually measuring amounts of fluorescence associated with said cells, or soluble or solid supports; and
- determining the degree of inhibition by one or more of said compounds of binding of said ligand to said target molecule;

wherein said amounts of fluorescence associated with said cells, or soluble or solid supports is estimated according to any of claims 1 to 15.

21. An assay for testing a compound to determine the degree of binding of said compound to a target molecule expressed by or attached to a cell, or soluble or solid support, said assay comprising the steps of:

- adding a liquid suspension of said target molecule expressed by or attached to said cell, or soluble or solid support to a container;
- adding a fluorescent compound to be tested for its binding to said container;
- incubating said target molecule expressed by or attached to said cell, or soluble or solid support and said compound;
- measuring amounts of fluorescence associated with said cell, or soluble or solid support; and
- determining the degree of binding of said compound to said target molecule;

wherein said amounts of fluorescence associated with said cell, or soluble or solid support is estimated according to any of claims 1 to 15.

22. The assay according to claim 21 wherein a plurality of different compounds and/or different targets is tested in a plurality of containers.

**Patentansprüche**

1. Verfahren zum Erfassen von fluoreszierenden Proben von Zellen oder löslichen oder festen Trägern in einem Medium, wobei das Verfahren die folgenden Schritte umfasst:

(a) Überwachen der Intensität von Fluoreszenz, die von den fluoreszierenden Proben emittiert wird, durch Messen der Zahl von Photonenzählereignissen n pro Zählzeitintervall in einer Vielzahl von erfassten Volumina mit Hilfe von einem oder mehreren Photonendetektoren;
(b) Berechnen einer Reihe von Momenten $\hat{M}_1$ der gemessenen Zahlen von Photonenzählereignissen, die definiert sind als

$$\hat{M}_i = \sum_n \mathbf{n}^i \hat{P}(\mathbf{n}) = \text{Mittelwert } (n^i) = \text{Mittelwert } (n_1^{i_1} n_2^{i_2} \ldots),$$

wobei $\hat{P}(\mathbf{n})$ ein normiertes Histogramm von Zahlen von Photonenzählereignissen bezeichnet; und
(c) Schätzen charakteristischer Parameter der Zellen oder der löslichen oder festen Träger $a_{Zelle}$ und des Mediums $a_{Medium}$ anhand der Reihe von Momenten $\hat{M}_i$ unter Verwendung einer Menge von Gleichungen, die verschiedenen Ordnungen des Moments i entsprechen, einer allgemeinen Form

$$\hat{M}_i = P_{Zelle} M_i^{(Zelle)}(a_{Zelle}) + (1 - P_{Zelle}) M_i^{(Medium)}(a_{Medium}),$$

wobei
$P_{Zelle}$ die Wahrscheinlichkeit dafür bezeichnet, dass sich das erfasste Volumen in oder auf der Zelle oder dem löslichen oder festen Träger befindet;
$M_i^{(Zelle)}(a_{Zelle})$ das erwartete i-te Moment der Zahl von Photonenzählereignissen, wenn sich das erfasste Volumen in oder auf der Zelle oder dem löslichen oder festen Träger befindet, als Funktion der Parameter $a_{Zelle}$ bezeichnet; und
$M_i^{(Medium)}(a_{Medium})$ das erwartete i-te Moment der Zahl von Photonenzählereignissen, wenn sich das erfasste Volumen im Medium befindet, als Funktion der Parameter $a_{Medium}$ bezeichnet.

2. Verfahren gemäß Anspruch 1, wobei das Medium eine Flüssigkeit oder ein Gel ist.

3. Verfahren gemäß Anspruch 1 oder 2, wobei das Medium fluoreszierende Liganden umfasst, die an die Zellen oder die löslichen oder festen Träger binden können, wobei $M_i^{(Medium)}$ aus den Kumulanten $K_l = c_{Ligand} q^l_{Ligand}$ berechnet werden, wobei $C_{Ligand}$ die mittlere Anzahl der Liganden pro erfasstem Volumen bezeichnet und $q_{Ligand}$ die mittlere Zahl von Photonenzählereignissen, die von einem oder mehreren Photonendetektoren pro Ligand nachgewiesen werden, bezeichnet.

4. Verfahren gemäß einem der Ansprüche 1 oder 3, wobei Werte für diese charakteristischen Parameter der Zellen oder der löslichen oder festen Träger, von denen erwartet wird, dass sie über eine Reihe von Proben hinweg konstant sind, auf einen einzigen Wert festgelegt werden, während weitere charakteristische Parameter anhand der Reihe von Momenten $\hat{M}_i$ geschätzt werden.

5. Verfahren gemäß einem der Ansprüche 1 bis 4, weiterhin umfassend:

   Anwenden eines Bildanalyseverfahrens, um einen oder mehrere der Parameter von $P_{Zelle}$, $a_{Zelle}$ oder $a_{Medium}$ zu bestimmen.

6. Verfahren gemäß einem der Ansprüche 1 bis 5, weiterhin umfassend:

   Überwachen der Intensität der durch die Proben gestreuten Emission.

7. Verfahren gemäß einem der Ansprüche 1 bis 6, wobei die charakteristischen Parameter der Zellen oder der löslichen oder festen Träger $a_{Zelle}$ aus der Gruppe ausgewählt sind, die aus Konzentration, spezifischer Helligkeit, Breite der Helligkeitsverteilung und einer Funktion von Intensitäten verschiedener Polarisationskomponenten der Emission oder spektral unterschiedlicher Komponenten der Emission besteht.

8. Verfahren gemäß einem der Ansprüche 1 bis 7, wobei die Zahl von Photonenzählereignissen unter Verwendung von wenigstens zwei Photonendetektoren, die die Emission von verschiedenen Wellenlängen und/oder unterschiedlicher Polarisation überwachen, bestimmt wird und wobei eine Reihe von wenigstens zweidimensionalen Momenten $\hat{M}_{ij}$ von Zahlen von Photonenzählereignissen $n_1$ und $n_2$ berechnet werden, die definiert sind als

$$\hat{M}_{ij} = \sum_{n_1} \sum_{n_2} n_1^i n_2^j \hat{P}(n_1, n_2) = \text{Mittelwert } (n_1^i n_2^j).$$

9. Verfahren gemäß einem der Ansprüche 1 bis 8, wobei die Vielzahl von erfassten Volumina zeitlich nacheinander überwacht werden, indem man das erfasste Volumen im Abtastmodus durch die Probe hindurch bewegt.

10. Verfahren gemäß einem der Ansprüche 1 bis 8, wobei die Vielzahl von erfassten Volumina parallel überwacht werden.

11. Verfahren gemäß den Ansprüchen 9 oder 10, wobei die Vielzahl von erfassten Volumina verwendet werden, um ein zwei- oder dreidimensionales Bild zu bilden.

12. Verfahren gemäß einem der Ansprüche 1 bis 11, wobei eine konfokale optische Vorrichtung verwendet wird, um die Intensität der Emission zu überwachen.

13. Verfahren gemäß einem der Ansprüche 1 bis 12, wobei Multiphotonenanregung eingesetzt wird, um die Fluoreszenzemission zu stimulieren.

14. Verfahren gemäß einem der Ansprüche 1 bis 13, wobei der Durchmesser der Zellen oder der löslichen oder festen Träger in jeder Dimension X, Y und Z größer ist als der Durchmesser des erfassten Volumens.

15. Verfahren gemäß einem der Ansprüche 1 bis 14 zur Verwendung in der Diagnostik, im Hochdurchsatz-Wirkstoff-Screening, bei der Optimierung von Eigenschaften von Molekülen oder der Identifizierung von speziellen Populationen der Zellen oder der löslichen oder festen Träger.

16. Vorrichtung zur Durchführung des Verfahrens gemäß den Ansprüchen 1 bis 15, umfassend:

   - einen Tisch zum Ablegen einer Probe an einer Untersuchungsstelle, wobei die Probe Zellen oder lösliche oder feste Träger in einem Medium umfasst;
   - eine Lichtquelle, die so positioniert ist, dass sie Licht an die Probe an der Untersuchungsstelle abgibt;
   - einen Detektor, der so positioniert ist, dass er von der Probe an der Untersuchungsstelle ausgestrahlte Fluoreszenz empfängt, und so aufgebaut ist, dass er die Zahlen von Photonenzählereignissen n pro Zählzeitintervall in einer Vielzahl von erfassten Volumina bestimmt und die Zahlen n an eine Bewertungsvorrichtung übermittelt;
- eine Bewertungsvorrichtung, die an den Detektor gekoppelt ist, um die Zahlen n zu empfangen und zu bewerten;
**dadurch gekennzeichnet, dass**
- die Bewertungsvorrichtung geeignet ist, um

(i) eine Reihe von Momenten $\hat{M}_i$ der gemessenen Zahlen von Photonenzählereignissen zu berechnen, die definiert sind als

$$\hat{M}_i = \sum_n \mathbf{n}^i \hat{P}(\mathbf{n}) = \text{Mittelwert}(n^i) = \text{Mittelwert}(n_1^{i_1} n_2^{i_2} \ldots),$$

wobei $\hat{P}(n)$ ein normiertes Histogramm von Zahlen von Photonenzählereignissen bezeichnet; und
(ii) charakteristische Parameter der Zellen oder der löslichen oder festen Träger $a_{Zelle}$ und des Mediums $a_{Medium}$ anhand der Reihe von Momenten $\hat{M}_1$, unter Verwendung einer Menge von Gleichungen, die verschiedenen Ordnungen des Moments i entsprechen, einer allgemeinen Form

$$\hat{M}_i = P_{Zelle} M_i^{(Zelle)}(a_{Zelle}) + (1 - P_{Zelle}) M_i^{(Medium)}(a_{Medium}),$$

zu schätzen, wobei
$P_{Zelle}$ die Wahrscheinlichkeit dafür bezeichnet, dass sich das erfasste Volumen in oder auf der Zelle oder dem löslichen oder festen Träger befindet;
$M_i^{(Zelle)}(a_{Zelle})$ das erwartete i-te Moment der Zahl von Photonenzählereignissen, wenn sich das erfasste Volumen in oder auf der Zelle oder dem löslichen oder festen Träger befindet, als Funktion der Parameter $a_{Zelle}$ bezeichnet; und
$M_i^{(Medium)}(a_{Medium})$ das erwartete i-te Moment der Zahl von Photonenzählereignissen, wenn sich das erfasste Volumen im Medium befindet, als Funktion der Parameter $a_{Medium}$ bezeichnet.

17. Vorrichtung gemäß Anspruch 16, die weiterhin ein konfokales optisches Element umfasst, das sich zwischen der Lichtquelle und dem Detektor befindet, wobei das konfokale optische Element Licht im Wesentlichen ausschließlich aus einem erfassten Volumen der Probe weiterleiten kann.

18. Vorrichtung gemäß Anspruch 16 oder 17, wobei die X- und die Y-Achse senkrecht zueinander und parallel zum Tisch definiert sind, weiterhin umfassend eine Einstellvorrichtung für die X- und die Y-Achse, die die relativen Positionen des erfassten Volumens und der Probe entlang der X- und der Y-Achse automatisch einstellt.

19. Vorrichtung gemäß einem der Ansprüche 16 bis 18, wobei eine Z-Achse im Wesentlichen senkrecht zum Tisch definiert ist, weiterhin umfassend eine Einstellvorrichtung für die Z-Achse, die die relativen Positionen des erfassten Volumens entlang der Z-Achse automatisch einstellt.

20. Assay zum Screening einer Vielzahl von Verbindungen auf Hemmung zwischen einem Liganden und einem Zielmolekül, das von einer Zelle exprimiert wird oder an eine Zelle oder einen löslichen oder festen Träger gebunden ist, wobei der Assay die folgenden Schritte umfasst:

- Einfüllen einer flüssigen Suspension der Zielmoleküle, die von der Zelle exprimiert werden oder an die Zelle oder den löslichen oder festen Träger gebunden sind, in eine Vielzahl von Behältern;
- Einfüllen einer Vielzahl von Verbindungen, die einem Screening auf die Hemmung unterzogen werden sollen, in die Vielzahl von Behältern;
- Einfüllen von fluoreszenzmarkiertem Ligand in die Behälter;
- Inkubieren der Zielmoleküle, die von der Zelle exprimiert werden oder an die Zelle oder den löslichen oder festen Träger gebunden sind, der Verbindungen und des fluoreszenzmarkierten Liganden;
- individuelles Messen der Mengen an Fluoreszenz, die mit den Zellen oder löslichen oder festen Trägern verbunden sind; und
- Bestimmen des Grades der Hemmung der Bindung des Liganden an das Zielmolekül durch eine oder mehrere der Verbindungen;

wobei die Mengen an Fluoreszenz, die mit den Zellen oder löslichen oder festen Trägern verbunden sind, gemäß einem der Ansprüche 1 bis 15 geschätzt werden.

21. Assay zum Testen einer Verbindung, um den Grad der Bindung der Verbindung an ein Zielmolekül, das von einer Zelle exprimiert wird oder an eine Zelle oder einen löslichen oder festen Träger gebunden ist, zu bestimmen, wobei der Assay die folgenden Schritte umfasst:

- Einfüllen einer flüssigen Suspension der Zielmoleküle, die von der Zelle exprimiert werden oder an die Zelle oder den löslichen oder festen Träger gebunden sind, in einen Behälter;
- Einfüllen einer auf ihre Bindung zu testenden fluoreszierenden Verbindung in den Behälter;
- Inkubieren der Zielmoleküle, die von der Zelle exprimiert werden oder an die Zelle oder den löslichen oder festen Träger gebunden sind, und der Verbindung;
- Messen der Mengen an Fluoreszenz, die mit der Zelle oder dem löslichen oder festen Träger verbunden sind; und
- Bestimmen des Grades der Bindung der Verbindung an das Zielmolekül;

wobei die Mengen an Fluoreszenz, die mit der Zelle oder dem löslichen oder festen Träger verbunden sind, gemäß einem der Ansprüche 1 bis 15 geschätzt werden.

22. Assay gemäß Anspruch 21, wobei in einer Vielzahl von Behältern eine Vielzahl von verschiedenen Verbindungen und/oder verschiedenen Zielmolekülen getestet werden.

## Revendications

1. Procédé de détection d'échantillons fluorescents de cellules, ou de supports solubles ou solides dans un milieu, ledit procédé comprenant les étapes consistant à :

(a) surveiller l'intensité de la fluorescence émise à partir desdits échantillons fluorescents en mesurant, à l'aide d'un ou plusieurs détecteurs de photons, les nombres de décomptes de photons n par intervalle de temps de décompte dans une pluralité de valeurs détectés,
(b) calculer une série de moments $\hat{M}_i$ des nombres de décomptes de photons mesurés, définis comme

$$\hat{M}_i = \sum_n n^i \hat{P}(n) = moyenne\ (n^i) = moyenne(n_1^{i1} n_2^{i2}...),$$

où $\hat{P}(n)$ indique un histogramme normalisé des nombres de décomptes de protons,
et
(c) estimer des paramètres caractéristiques des cellules, ou des supports solubles ou solides $a_{cellule}$ et du milieu $a_{milieu}$ à partir de ladite série de moments $\hat{M}_i$ à l'aide d'un jeu d'équations correspondant à des ordres différents du moment i, de forme générale

$$\hat{M}_i = P_{cellule} M_i^{(cellule)}(a_{cellule}) + (1 - P_{cellule}) M_i^{(milieu)}(a_{milieu}),$$

où
$P_{cellule}$ indique la probabilité selon laquelle le volume détecté est situé dans ou sur la cellule, ou le support soluble ou solide,
$M_i^{(cellule)}(a_{cellule})$ indique le i-ième moment attendu du nombre de décomptes de photons à condition que le volume détecté soit situé dans ou sur la cellule, ou le support soluble ou solide, en fonction des paramètres $a_{cellule}$ et
$M_i^{(milieu)}(a_{milieu})$ indique le i-ième moment attendu du nombre de décomptes de photons à condition que le volume détecté soit situé dans le milieu, en fonction des paramètres $a_{milieu}$.

2. Procédé selon la revendication 1, dans lequel le milieu est un liquide ou un gel.

3. Procédé selon la revendication 1 ou 2, dans lequel le milieu comprend des ligands fluorescents capables de se lier auxdites cellules, ou auxdits supports solubles ou solides et dans lequel $M_i^{(milieu)}$ st calculé à partir de cumulants
$K_i = C_{ligand} j_{ligand}$,
où $C_{ligand}$ indique le nombre moyen de ligands par volume détecté,
et $q_{ligand}$ indique le nombre moyen de décomptes de photons détectés par ligand par un ou plusieurs détecteurs de photons.

4. Procédé selon l'une quelconque des revendications 1 à 3, dans lequel des valeurs des paramètres caractéristiques des cellules, ou des supports solubles ou solides qui sont censées être constantes à travers une série d'échantillons, sont fixées à une valeur unique tout en estimant des paramètres caractéristiques supplémentaires à partir de ladite série de moments $\hat{M}_i$.

5. Procédé selon l'une quelconque des revendications 1 à 4, comprenant en outre l'étape consistant à :

appliquer une procédure d'analyse d'image afin de déterminer un ou plusieurs des paramètres $P_{cellule}$, $a_{cellule}$ ou $a_{milieu}$.

6. Procédé selon l'une quelconque des revendications 1 à 5, comprenant en outre :

la surveillance de l'intensité de l'émission diffusée par lesdits échantillons.

7. Procédé selon l'une quelconque des revendications 1 à 6, dans lequel lesdits paramètres caractéristiques desdites cellules, ou desdits supports solubles ou solides $a_{cellule}$ sont choisis à partir du groupe constitué par la concentration, la luminosité spécifique, la largeur d'une distribution de luminosité, et une fonction d'intensités de composantes d'émission de polarisation différentes ou de composantes d'émission différentes sur le plan spectrale.

8. Procédé selon l'une quelconque des revendications 1 à 7, dans lequel le nombre de décomptes de photons est déterminé à l'aide d'au moins deux détecteurs de photons surveillant l'émission de longueur d'onde différente et/ou polarisation différente et dans lequel une série d'au moins deux moments bidimensionnels $\hat{M}_{ij}$ des nombres de décomptes de photons $n_1$ et $n_2$ est calculée, définie comme

$$Mij = \sum_{n_1} \sum_{n_2} n_1^i n_2^j \hat{P}(n_1, n_2) = moyenne\,(n_1^i n_2^i)$$

9. Procédé selon l'une quelconque des revendications 1 à 8, dans lequel ladite pluralité de volumes détectés est surveillée séquentiellement dans le temps en balayant un volume détecté à travers l'échantillon.

10. Procédé selon l'une quelconque des revendications 1 à 8, dans lequel ladite pluralité de volumes détectés est surveillée en parallèle.

11. Procédé selon la revendication 9 ou 10, dans lequel ladite pluralité de volumes détectés est utilisée pour former une image bi- ou tri-dimensionnelle.

12. Procédé selon l'une quelconque des revendications 1 à 11, dans lequel un dispositif optique confocal est utilisé pour surveiller l'intensité d'émission.

13. Procédé selon l'une quelconque des revendications 1 à 12, dans lequel une excitation multiphotonique est employée pour stimuler l'émission de fluorescence.

14. Procédé selon l'une quelconque des revendications 1 à 13, dans lequel, dans chaque dimension X, Y et Z, le diamètre desdites cellules, ou desdits supports solubles ou solides est supérieur au diamètre du volume détecté.

15. Procédé selon l'une quelconque des revendications 1 à 14, destiné à être utilisé dans un diagnostic, un criblage de médicament haut débit, l'optimisation de propriétés de molécules ou l'identification de populations de cellules spécifiques ou de supports solubles ou solides.

**16.** Appareil permettant d'exécuter le procédé selon les revendications 1 à 15, comprenant :

- un étage permettant de supporter un échantillon dans un site d'examen, l'échantillon comprenant des cellules ou des supports solubles ou solides dans un milieu ;
- une source de lumière positionnée pour fournir de la lumière à l'échantillon dans le site d'examen ;
- un détecteur positionné pour recevoir la fluorescence émise à partir de l'échantillon dans le site d'examen et construit de sorte qu'il détermine les nombres de décomptes de photons n par intervalle de temps de décompte dans une pluralité de volume détectés et fournit les nombres n à un dispositif d'évaluation ;
- un dispositif d'évaluation couplé au détecteur permettant de recevoir et d'évaluer les nombres n ; **caractérisé en ce que**
- le dispositif d'évaluation est adapté pour

(i) calculer une série de moments $\hat{M}_i$ des nombres de décomptes de photons mesurés, définis comme

$$\hat{M}_i = \sum_n n^i \hat{P}(n) = moyenne\ (n^i) = moyenne\,(n_1^{i_1} n_2^{i_2}\ldots),$$

où $\hat{P}(n)$ indique un histogramme normalisé des nombres de décomptes de protons,
et
(ii) estimer des paramètres caractéristiques des cellules, ou des supports solubles ou solides $a_{cellule}$ et du milieu $a_{milieu}$ à partir de ladite série de moments $\hat{M}_i$ à l'aide d'un jeu d'équations correspondant à des ordres différents du moment i, de forme générale

$$\hat{M}_i = P_{cellule}M_i^{(cellule)}(a_{cellule}) + (1 - P_{cellule})M_i^{(milieu)}(a_{milieu}),$$

où
$P_{cellule}$ indique la probabilité selon laquelle le volume détecté est situé dans ou sur la cellule, ou le support soluble ou solide,

$M_i^{(cellule)}(a_{cellule})$ indique le i-ième moment attendu du nombre de décomptes de photons à condition que le volume détecté soit situé dans ou sur la cellule, ou le support soluble ou solide, en fonction des paramètres $a_{cellule}$ et

$M_i^{(milieu)}(a_{milieu})$ indique le i-ième moment attendu du nombre de décomptes de photons à condition que le volume détecté soit situé dans le milieu, en fonction des paramètres $a_{milieu}$.

**17.** Appareil selon la revendication 16, comprenant en outre un élément optique confocal situé entre la source de lumière et le détecteur, l'élément optique confocal étant capable de transmettre la lumière sensiblement exclusivement à partir d'un volume détecté de l'échantillon.

**18.** Appareil selon la revendication 16 ou 17, dans laquelle les axes X et Y sont définis pour être perpendiculaires l'un à l'autre et parallèles à l'étage, comprenant en outre un dispositif d'ajustement des axes X et Y qui ajuste automatiquement les positions relatives du volume détecté et de l'échantillon le long des axes X et Y.

**19.** Appareil selon l'une quelconque des revendications 16 à 18, dans lequel un axe Z est défini de sorte à être perpendiculaire à l'étage, comprenant en outre un dispositif d'ajustement d'axe Z qui ajuste automatiquement les positions relatives du volume détecté le long de l'axe Z.

**20.** Dosage de criblage d'une pluralité de composés pour l'inhibition entre un ligand et une molécule cible exprimée par ou attachée à une cellule, ou un support soluble ou solide, ledit dosage comprenant les étapes consistant à :

- ajouter une suspension liquide desdites molécules cibles exprimées par ou attachées à ladite cellule, ou audit support soluble ou solide, à une pluralité de contenants ;

- ajouter une pluralité de composés à cribler pour ladite inhibition à ladite pluralité de contenants ;
- ajouter un ligand tracé de manière fluorescente auxdits contenants ;
- incuber lesdites molécules cibles exprimées par ou attachées à ladite cellule, ou audit support soluble ou solide, lesdits composés et lesdits ligands tracés de manière fluorescente ;
- mesurer individuellement des quantités de fluorescence associées auxdites cellules, ou auxdits supports solubles ou solides ; et
- déterminer le degré d'inhibition par un ou plusieurs desdits composés de liaison dudit ligand à ladite molécule cible ;

dans lequel lesdites quantités de fluorescence associées auxdites cellules, ou auxdits supports solubles ou solides, sont estimées selon l'une quelconque des revendications 1 à 15.

21. Dosage de mise à l'essai d'un composé pour déterminer le degré de liaison dudit composé à une molécule cible exprimée par ou attachée à une cellule, ou un support soluble ou solide, ledit dosage comprenant les étapes consistant à :

- ajouter une suspension liquide de ladite molécule cible exprimée par ou attachée à ladite cellule, ou audit support soluble ou solide, à un contenant ;
- ajouter un composé fluorescent mis à l'essai pour sa liaison audit contenant ;
- incuber ladite molécule cible exprimée par ou attachée à ladite cellule, ou audit support soluble ou solide, et ledit composé ;
- mesurer des quantités de fluorescence associées à ladite cellule, ou audit support soluble ou solide ; et
- déterminer le degré de liaison dudit composé à ladite molécule cible ;

dans lequel lesdites quantités de fluorescence associées à ladite cellule, ou audit support soluble ou solide, sont estimées selon l'une quelconque des revendications 1 à 15.

22. Dosage selon la revendication 21, dans lequel une pluralité de composés différents et/ou de cibles différentes est mise à l'essai dans une pluralité de contenants.

β-adrenergic receptor

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0601714 A
- EP 0911667 A1
- WO 98286655 A
- EP 98124314 A

**Non-patent literature cited in the description**

- **PERSIDIS A.** *Nat. Biotechnol.,* 1998, vol. 16, 488-489
- **UDDHAV, K. et al.** *Mol. Biol. Rep.,* 1998, vol. 25, 27-43
- **STADEL et al.** *Trends Pharmacol. Sci.,* 1997, vol. 18, 430-437
- **QIAN et al.** *Proc. Natl. Acad. Sci. USA,* July 1990, vol. 87, 5479-5483